# FASCICULE DE BREVET EUROPEEN

(11) **EP 0 589 803 B1**
(45) Date de publication et mention de la délivrance du brevet: **09.07.1997**
(21) Numéro de dépôt: 93402347.4
(22) Date de dépôt: 24.09.1993
(51) Int. Cl.: B31F 1/28, D21H 27/32, B32B 29/08, B32B 7/10

(54) **Carton ondulé renforcé et procédé de fabrication**
Verstärkte Wellpappe und Verfahren zu ihrer Herstellung
Reinforced corrugated cardboard and method for production thereof

(30) Priorité: 24.09.1992 FR 9211369
(43) Date de publication de la demande: 30.03.1994
(73) Titulaire: VETROTEX FRANCE, F-73000 Chambéry (FR)
(72) Inventeur: Pivoteau, Jean, F-73420 Le Viviers du Lac (FR); Mosnier, Patrick, F-73000 Jacob-Bellecombette (FR)
(74) Mandataire: Breton, Jean-Claude

(56) Documents cités:
- EP-A- 0 513 926
- FR-A- 1 019 093
- GB-A- 1 598 417
- US-A- 4 452 837
- ABSTRACT BULLETIN; APPLETON, WI, USA 59(1988) July Nr. 1, Page 40 *Strength properties of filament reinforced paperboard packaging*

## Description

L'invention concerne un carton ondulé renforcé et un procédé de fabrication de ce produit.

Le carton ondulé trouve son utilisation notamment comme emballage. Il permet de bien protéger les produits du fait de ses cannelures qui créent une épaisseur de protection et amortissent les compressions dues à d'éventuels chocs.

Le carton ondulé est formé d'un flan ondulé collé par le sommet des ondulations de ses cannelures à un flan plan appelé couverture.

Dans certains cas, on dispose une couverture de part et d'autre du flan ondulé.

Bien qu'améliorant le conditionnement des marchandises ce type de carton est déficient en certains points des emballages soumis à des contraintes très rudes. Il s'agit notamment des lignes de pliures ou des poignées percées sur des côtés de l'emballage qui fragilisent le carton et peuvent conduire à une déchirure. Il s'agit également d'une déformation possible du carton ondulé lors de la manutention d'emballage renfermant des marchandises lourdes.

Dans tous ces cas, il existe des contraintes qui ont tendance à étirer le carton.

Pour éviter ces inconvénients, il est intéressant de renforcer le carton ondulé. Il ne faut pas pour autant trop augmenter le coût de fabrication du carton ondulé. Celui-ci n'est que l'emballage d'un produit commercial mais son coût s'ajoute au prix de revient du produit. Le coût de l'emballage doit donc rester très faible.

Différents types de solutions pour renforcer le carton ondulé ont été proposés.

Un premier type de solution consiste à déposer des feuillards en plastique entre le flanc ondulé et la couverture. Cela apporte une meilleure résistance aux cannelures mais, du fait de l'épaisseur non négligeable des feuillards par rapport à celle de la couverture, ceux-ci apparaissent en relief sur la face externe de la couverture. Cet effet nuit sensiblement à l'esthétique du conditionnement. D'autre part, ce type de renforcement est très onéreux.

Un second type de solution, décrit dans le brevet FR-B-2 217 939, consiste à coller des fils de rayonne sur le sommet des cannelures, entre le flanc ondulé et le couverture, simultanément à l'assemblage de ces deux parties. Cette réalisation assure principalement un bon maintien des cannelures. Par contre, le renfort apporté à la couverture est peu important car les fils ne sont pas solidaires de cet élément.

Un autre type de solution décrit dans le brevet US-A-4 452 837, consiste à déposer des fils enduits d'une couche de matière organique thermoplastique entre le flanc ondulé et la couverture qui composent le carton ondulé. Les fils sont ensuite collés au carton par élévation de la température de ce dernier jusqu'au point de ramollissement du thermoplastique. Cette technique nécessite donc l'emploi d'un dispositif permettant d'élever la température du carton après l'assemblage du flanc ondulé et de la couverture. Les coûts de fabrication sont nécessairement augmentés par l'énergie supplémentaire qui est consommée. D'autre part, les fils de renforcement doivent être enduits du thermoplastique au préalable. Cela conduit à une étape supplémentaire de préparation et donc des coûts plus élevés.

Le document FR-1 019 093 qui peut être considéré comme l'art antérieur le plus proche propose dans une variante un renforcement d'un carton ondulé par des fils de verre . Selon ce document, l'adhésion des fils est obtenue par collage soit à l'aide de la colle utilisée pour l'adhésion de la couverture sur la feuille ondulée, soit au préalable par collage sur l'un des éléments. Dans le premier cas, on obtient un carton ondulé renforcé par des fils qui ne sont collés qu'au sommet des cannelures. Dans le deuxième cas, un collage préalable nécessite à priori une étape supplémentaire de préparation.

L'invention a pour objet un procédé de fabrication d'un carton ondulé renforcé, dont la mise en oeuvre est simple et peu onéreuse et qui permet la réalisation d'emballages à la fois résistants et esthétiques.

Ce but est atteint par le procédé de fabrication de carton ondulé tel que défini principalement par la revendication 1.

De préférence et de façon à faciliter l'adhésion des fils sur la couverture, lesdits fils sont comprimés contre celle-ci.

Lors de leur fabrication, les fils de verre continus ont été revêtus par un ensimage, généralement en phase acqueuse, de façon à obtenir notamment une bonne cohésion des filaments de verre qui composent chaque fil. L'ensimage permet également d'augmenter la résistance à l'abrasion.

Les fils de verre utilisés dans le cadre de l'invention sont revêtus d'un ensimage comprenant au moins un constituant choisi parmi la famille des amidons, tel que la dextrine, ou parmi les constituants des amidons, tels que l'amylopectine et l'amylose, ou parmi des dérivés de ces constituants. Un ensimage de ce type est décrit dans le brevet US-A-3 108 891. Lorsque les fils ainsi ensimés sont mis en contact avec le carton humide, le ou les constituants précédemment mentionnés deviennent collants ou réagissent avec le carton composé de cellulose et d'une part d'amidon. La cellulose et l'amidon étant deux éléments de la famille des polysaccharides, ils présentent certaines affinités.

L'adhésion des fils sur le carton peut donc se faire soit du fait de la nature collante de l'amidon soit par réaction de l'amidon sur le carton.

L'utilisation de la solution d'ensimage déterminée au préalable, qu'il suffit de réhumidifier pour permettre une adhésion fils de verre continus-carton est très simple à mettre en oeuvre et n'augmente donc pas excessivement les coûts de production de l'emballage.

De façon préférée, et par souci d'esthétisme, les fils fixés sur la couverture sont disposés entre les cannelures du flan ondulé et la couverture lors du collage de ces deux parties formant le carton ondulé.

Dans un mode de réalisation, on dispose les fils parallèlement les uns aux autres suivant la direction perpendiculaire aux cannelures. De cette façon, le renforcement du carton se fait suivant cette direction.

Dans un autre mode de réalisation, les fils sont répartis sur la couverture sous la forme d'ondes périodiques et symétriques par rapport à un axe perpendiculaire aux cannelures. Cette répartition permet d'augmenter le renfort que celles-ci peuvent déjà apporter au carton ondulé.

Le carton ondulé réalisé selon l'invention possède des caractéristiques mécaniques qui sont pratiquement constantes quels que soient le degré hygrométrique et la température de l'atmosphère qui l'environne. En effet, contrairement à d'autres renforts, les fils de verre ont la particularité d'être quasiment inextensibles et donc d'offrir un renfort maximum en permanence.

Grâce à la qualité du renforcement obtenu par le procédé selon l'invention, il est possible de fabriquer des emballages qui, comparés à des emballages non renforcés et à caractéristiques mécaniques identiques, seront constitués de cartons présentant un grammage réduit. L'économie de matière ainsi réalisée peut être importante.

L'invention propose également un carton ondulé renforcé formé d'au moins un flan ondulé collé par le sommet des ondulations de ses cannelures à au moins un flan plan appelé couverture et de renforts qui sont des fils de verre continus ensimés, l'ensimage comprenant au moins un constituant choisi parmi la famille des amidons, des constituants des amidons ou des dérivés de ces constituants.

Selon un mode préféré de l'invention, les fils sont disposés entre un flan ondulé et une couverture. Les fils continus de verre sont avantageusement des fils dits textiles. Ces fils sont composés de filaments de diamètres inférieurs à 10 microns et de préférence compris entre 5 et 7 microns.

Le titre des fils de verre continu, c'est-à-dire leur poids par unité de longueur, est avantageusement compris entre 5 et 22 tex.

Le carton ondulé est ainsi renforcé par des fils de faibles diamètres. La finesse de ces fils rend possible le fait d'en disposer un nombre important sur une faible surface et de privilégier le renforcement du carton dans une zone bien définie en fonction de l'emballage qu'il permettra de réaliser ultérieurement.

Par ailleurs, la finesse de ces fils permet de les disposer entre le flan ondulé et la couverture sans qu'ils apparaissent en relief sur l'autre face de la couverture.

D'autres détails et caractéristiques avantageuses de l'invention ressortent ci-après de la description d'un exemple de dispositif mettant en oeuvre le procédé décrit en référence aux figures 1, 2 et 3 qui représentent :
- figure 1, une coupe schématique longitudinale d'une partie d'un exemple de dispositif permettant de réaliser l'invention,
- figure 2, un exemple de carton ondulé renforcé par une disposition en parallèle de fils de verre continus.
- figure 3, une représentation schématique des fils de verre continus collés sous forme d'ondes périodiques sur la couverture.

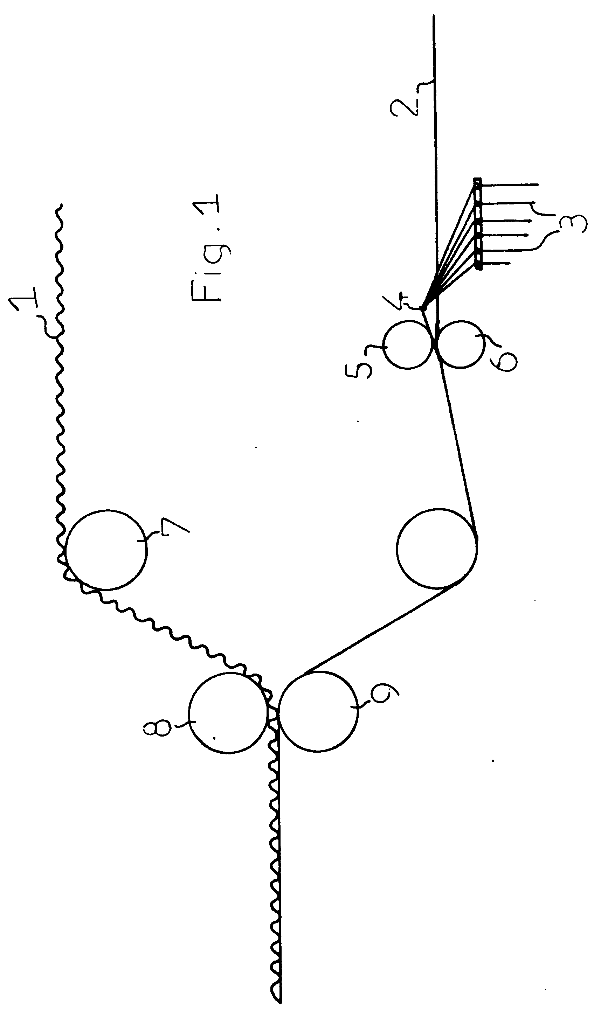

La figure 1, qui représente schématiquement un dispositif selon l'invention, montre les deux parties, flan ondulé 1 et couverture 2 qui viennent se coller l'une sur l'autre.

Le flan 1 est déjà passé sur une onduleuse et est stocké sous forme d'un rouleau de carton ondulé. Ce rouleau qui n'est pas représenté sur le schéma est dévidé au cours de la réalisation du carton ondulé renforcé.

La couverture 2 est également issue d'un rouleau qui n'est pas représenté.

Les fils de verre continus 3 sont extraits de bobines non représentées. Ces bobines sont obtenues de façon traditionnelle connue de l'homme du métier. Les fils textiles sont formés par le rassemblement de filaments obtenus par étirage mécanique de filets de verre fondu issus d''une multiplicité d'orifices d'une filière chauffée par effet Joule. Avant ce rassemblement, les filaments sont ensimés.

Pendant le défilement de la couverture 2 et avant son collage sur le flan ondulé 1, les fils de verre continus 3 sont mis en contact avec la couverture et répartis régulièrement sur cette dernière grâce à un dispositif de guidage 4, fixe et disposé transversalement à la couverture 2, au-dessus de celle-ci. Ce dispositif peut être une barrette percée de trous ou tout autre moyen connu de l'homme du métier.

A ce système de guidage, peut être ajouté un dispositif tel que des buses, du type venturi, envoyant de l'air comprimé pour amorcer le mouvement des fils et les entraîner sur la couverture. Ces jets d'air peuvent éventuellement être maintenus durant le défilement des fils et du carton.

Les fils passent par les trous de façon à être bien dirigés sur la couverture et sont appliqués sur celle-ci sous la pression d'un système de deux rouleaux 5 et 6. L'un de ces rouleaux peut comporter un système enducteur permettant d'humidifier les fils de verre et ainsi de les coller sur la couverture puisque l'eau réactive l'amidon déposé sur les fils sous forme d'ensimage.

Le nombre de fils et leur écartement doit pouvoir se régler aisément afin d'ajuster le renforcement en fonction du produit désiré.

Pour cela, on augmente le nombre de bobines et le nombre de trous dans le guide en déterminant la répartition voulue de ces trous. La répartition des trous va définir le positionnement des fils sur la couverture et l'écartement séparant deux fils.

La flan ondulé 1 est déroulé et l'on enduit de colle le sommet des cannelures par tout moyen connu de l'homme du métier et notamment à l'aide d'un rouleau enducteur 7 sur lequel passe la partie ondulée.

Les deux parties sont ensuite assemblées l'une à l'autre, la couverture 2 venant se coller sur le sommet des cannelures, sous la pression des rouleaux 8 et 9 .

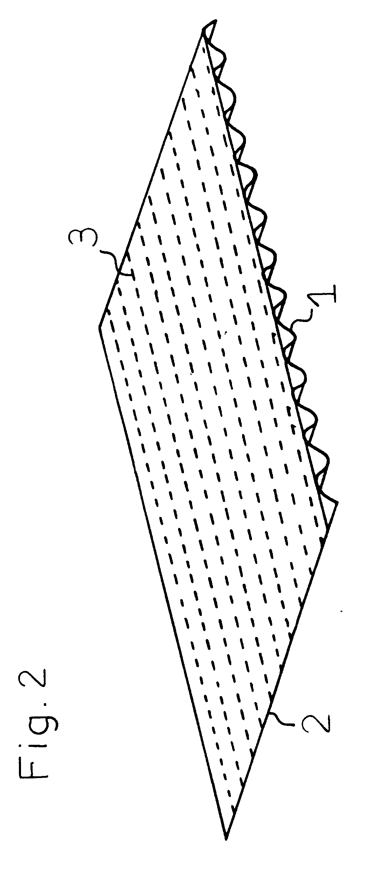

On obtient ainsi un carton ondulé renforcé qui est i représenté sur la figure 2. Sur cette représentation les fils de verre continus 3 sont disposés linéairement suivant la direction perpendiculaire aux cannelures et parallèlement les uns aux autres.

Pour réaliser un renfort en disposant les fils sous forme d'ondes périodiques et symétriques, il suffit d'animer le dispositif de guidage précédemment décrit d'un mouvement de va-et-vient perpendiculairement au sens de déplacement de la couverture. Un tel dispositif est décrit, par exemple, dans le brevet US-A-4 452 837.

Un tel renforcement par une disposition des fils sous forme d'ondes périodiques peut être très intéressant pour obtenir ce renforcement suivant deux directions.

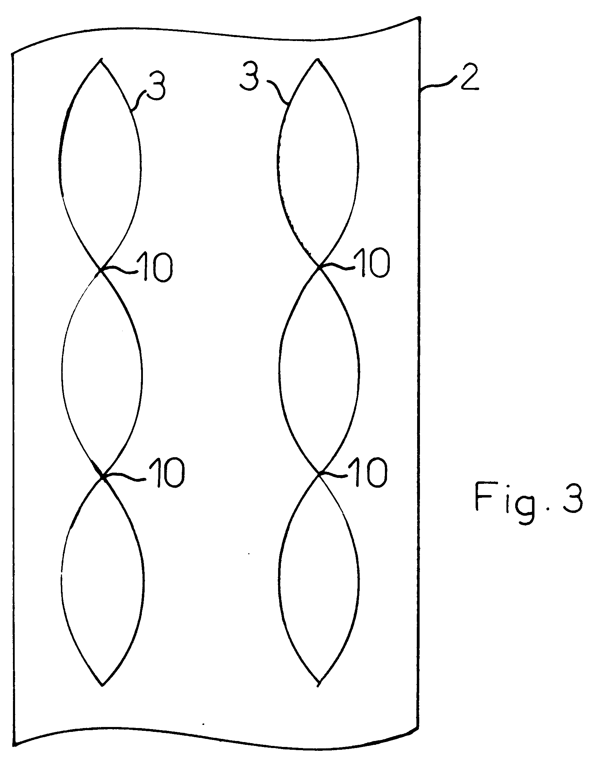

Mais, de façon à préserver un meilleur renforcement dans la direction perpendiculaire aux cannelures, il est préférable de déposer les fils sous forme d'ondes périodiques qui se chevauchent. Un tel exemple est représenté sur la figure 3 où les fils de verre continus 3 s'entrecroisent aux points 10.

D'autre part, dans la description qui précède, les fils de verre continus 3 sont disposés sur la couverture 2 avant que celle-ci ne soit collée sur le sommet des cannelures du flan ondulé 1. Il est cependant possible de disposer ces fils 3 lors de l'assemblage couverture-flan ondulé. Pour cela, il suffit de placer le guide ou barrette percée 4 juste avant le point de contact de la couverture 2 et du flan ondulé 1, c'est-à-dire juste avant le passage de ces éléments entre les rouleaux 8 et 9. Il est ainsi possible de supprimer les rouleaux 5 et 6 qui ne sont plus utiles. Il faut alors prévoir un dispositif permettant d'humidifier les fils à ce niveau. Il peut s'agir de tout système connu de l'homme du métier tel que des buses placées au-dessus du passage des fils et pulvérisant de l'eau.

Ces réalisations permettent d'obtenir un carton ondulé renforcé qui offre un très bon renforcement du fait des caractéristiques mécaniques du verre, notamment son module d'élasticité bien plus grand que celui du carton.

De plus, ces réalisations ne nécessitent ni l'adjonction d'une colle pour fixer ces fils ni un traitement préalable des fils et des techniques de mise en oeuvre difficiles et onéreuses.

## Revendications

1. Procédé de fabrication de carton ondulé formé d'au moins un flanc ondulé (1) collé par le sommet des ondulations de ses cannelures à au moins un flanc plan appelé couverture (2), ledit carton étant renforcé par des fils de verre continus (3), déposés sur une couverture (2), caractérisé en ce que lesdits fils de verre continus (3) sont revêtus lors de leur formation d'un ensimage comprenant au moins un constituant réagissant en présence d'humidité et assurant le collage desdits fils sur ladite couverture et en ce que les fils sont humidifiés préalablement à leur mise en contact avec la couverture.

2. Procédé selon la revendication 1, caractérisé en ce que les fils sont mis en contact avec la surface de la couverture et comprimés contre celle-ci.

3. Procédé selon l'une des revendications précédentes, caractérisé en ce que l'ensimage comprend au moins un constituant choisi parmi la famille des amidons, des constituants des amidons ou des dérivés de ces constituants.

4. Procédé selon l'une des revendications prédécentes, caractérisé en ce que l'on dispose les fils de verre continus entre un flanc ondulé (1) et une couverture (2).

5. Procédé selon l'une des revendications précédentes, caractérisé en ce que l'on dispose les fils (3) parallèlement les uns aux autres, suivant la direction perpendiculaire aux cannelures.

6. Procédé selon l'une des revendications 1 à 5, caractérisé en ce que l'on dispose les fils sous la forme d'ondes périodiques et symétriques par rapport à un axe perpendiculaire aux cannelures.

7. Carton ondulé renforcé formé d'au moins un flanc ondulé (1) collé par le sommet des ondulations de ses cannelures à au moins un flanc plan appelé couverture (2) et de renforts constitués de fils de verre continus (3) déposés sur la couverture, caractérisé en ce que ces fils de verre continus (3) sont ensimés, l'ensimage comprenant au moins un constituant choisi parmi la famille des amidons, des constituants des amidons ou des dérivés de ces constituants.

8. Carton ondulé selon la revendication 7, caractérisé en ce que les fils sont disposés entre un flanc ondulé (1) et une couverture (2).

9. Carton ondulé selon les revendications 7 ou 8, caractérisé en ce que les fils (3) sont composés de filaments de diamètre inférieur à 10 microns et de préférence compris entre 5 et 7 microns.

10. Carton ondulé renforcé selon la revendication 9, caractérisé en ce que les fils (3) ont un titre compris entre 5 et 22 tex.

## Claims

1. Process for the production of corrugated cardboard, formed of at least one corrugated side (1) adhered, by the top of the corrugations of its flutings to at least one flat side called a cover (2), said cardboard being reinforced by continuous glass fibres (3) deposited on a cover (2), characterised in that said continuous glass fibres (3) are covered, during their formation, with a size having at least one constituent which reacts in the presence of moisture and ensures the adhesion of said fibres on said cover; and in that the fibres are moistened prior to being brought into contact with the cover.

2. Process according to Claim 1, characterised in that the fibres are brought into contact with the surface of the cover and compressed against it.

3. Process according to one of the preceding Claims, characterised in that the size comprises at least one constituent selected from among the starch flour family, the constituents of starch flours or the derivatives of these constituents.

4. Process according to one of the preceding Claims, characterised in that the continuous glass fibres are disposed between a corrugated side (1) and a cover (2).

5. Process according to any one of the preceding Claims, characterised in that the fibres (3) are disposed parallel to one another, in the direction which is perpendicular to the flutings.

6. Process according to any one of Claims 1 to 5, characterised in that the fibres are disposed in the form of waves which occur at intervals and are symmetrical in relation to an axis which is perpendicular to the flutings.

7. Reinforced corrugated cardboard consisting of at least one corrugated side (1) adhered by the top of the corrugations of its flutings to at least one flat side called a cover (2) and of reinforcements formed of continuous glass fibres (3), deposited on the cover, characterised in that these continuous glass fibres (3) are sized, the size comprising at least one constituent selected from among the starch flour family, the constituents of starch flours or the derivatives of these constituents.

8. Corrugated cardboard according to Claim 7, characterised in that the fibres are arranged between a corrugated side (1) and a cover (2).

9. Corrugated cardboard according to Claim 7 or 8, characterised in that the fibres (3) are formed of filaments of a diameter of less than 10 microns and preferably of between 5 and 7 microns.

10. Reinforced corrugated cardboard according to Claim 9, characterised in that the fibres (3) have a denier of between 5 and 22 tex.

## Patentansprüche

1. Verfahren zur Herstellung von Wellpappe, welche aus mindestens einer gewellten Papierlage (1) gebildet ist, die auf den Rundungen ihrer Rillen mit wenigstens einer als Decklage (2) bezeichneten flachen Seite verleimt ist, wobei die Wellpappe von auf einer Decklage (2) aufgebrachten endlosen Glasfäden (3) verstärkt wird, **dadurch gekennzeichnet**, **daß** die endlosen Glasfäden (3) bei ihrer Bildung mit einer Schlichte überzogen werden, welche mindestens eine Komponente enthält, die in Gegenwart von Feuchtigkeit reagiert und das Verkleben dieser Fäden mit der Decklage sicherstellt, **und daß** die Fäden vor dem In-Berührung-Bringen mit der Decklage befeuchtet werden.

2. Verfahren nach Anspruch 1, **dadurch gekennzeichnet, daß** die Fäden mit der Oberfläche der Decklage in Berührung gebracht und an diese gepreßt werden.

3. Verfahren nach einem der vorhergehenden Ansprüche, **dadurch gekennzeichnet, daß** die Schlichte mindestens eine Komponente enthält, welche aus der Gruppe der Stärken, Stärkebestandteile oder Stärkebestandteilederivate ausgewählt ist.

4. Verfahren nach einem der vorhergehenden Ansprüche, **dadurch gekennzeichnet, daß** die endlosen Glasfäden zwischen einer gewellten Papierlage (1) und einer Decklage (2) angeordnet werden.

5. Verfahren nach einem der vorhergehenden Ansprüche, **dadurch gekennzeichnet, daß** die Fäden (3) untereinander parallel quer zu den Rillen angeordnet werden.

6. Verfahren nach einem der Ansprüche 1 bis 5, **dadurch gekennzeichnet, daß** die Fäden in Form periodischer Wellen angeordnet werden, die bezüglich einer zu den Rillen querstehenden Achse symmetrisch sind.

7. Verstärkte Wellpappe, welche aus mindestens einer gewellten Papierlage (1), die auf den Rundungen ihrer Rillen mit wenigstens einer als Decklage (2) bezeichneten flachen Seite verleimt ist, und Verstärkungen gebildet ist, die aus auf der Decklage aufgebrachten endlosen Glasfäden (3) bestehen, **dadurch gekennzeichnet, daß** die endlosen Glasfäden (3) mit einer Schlichte überzogen sind, welche mindestens eine Komponente enthält, die aus der Gruppe der Stärken, Stärkebestandteile oder Stärkebestandteilederivate ausgewählt ist.

8. Wellpappe nach Anspruch 7, **dadurch gekennzeichnet, daß** die Fäden zwischen einer gewellten Papierlage (1) und einer Decklage (2) angeordnet werden.

9. Wellpappe nach Anspruch 7 oder 8, **dadurch gekennzeichnet**, **daß** die Fäden (3) aus Filamenten mit einem Durchmesser von weniger als 10 Mikrometern und vorzugsweise von 5 bis 7 Mikrometern bestehen.

10. Verstärkte Wellpappe nach Anspruch 9, **dadurch gekennzeichnet, daß** die Fäden (3) einen Titer von 5 bis 22 tex besitzen.
